# EUROPEAN PATENT SPECIFICATION

(11) **EP 0 443 247 B1**
(45) Date of publication and mention of the grant of the patent: **15.11.1995**
(21) Application number: 90313031.8
(22) Date of filing: 30.11.1990
(51) Int. Cl.: H04N 1/32, H04N 1/23

(54) **Image communicating apparatus**
Bildübertragungsgerät
Dispositif de communication d'images

(30) Priority: 23.02.1990 JP 41058/90
(43) Date of publication of application: 28.08.1991
(73) Proprietor: CANON KABUSHIKI KAISHA, Tokyo (JP)
(72) Inventor: Ejiri, Seishi, c/o Canon Kabushiki Kaisha, Ohta-ku, Tokyo (JP); Shinada, Yasuyuki, c/o Canon Kabushiki Kaisha, Ohta-ku, Tokyo (JP)
(74) Representative: Beresford, Keith Denis Lewis

(56) References cited:
- EP-A- 0 201 772
- US-A- 4 745 414
- PATENT ABSTRACTS OF JAPAN vol. 9, no. 181 (E-331)26 July 1985 & JP-A-60 051 364
- PATENT ABSTRACTS OF JAPAN vol. 5, no. 129 (E-070) 19 August 1981 & JP-A-56 064 557
- PATENT ABSTRACTS OF JAPAN vol. 9, no. 114 (M-380) 18 May 1985 & JP-A-60 002 368
- PATENT ABSTRACTS OF JAPAN vol. 4, no. 56 (E-008) 25 April 1980 & JP-A-55 026 702

## Description

### BACKGROUND OF THE INVENTION

### Field of the Invention

The present invention relates to an image communicating apparatus such as a facsimile apparatus, and more particularly to an image communicating apparatus equipped with an ink jet recording head and adapted to effect image reception in an error correction mode.

### Related Background Art

There have recently been developed ink jet printers using the so-called bubble jet process, in which liquid ink is discharged from discharge openings, by means of bubbles generated by thermal energy, toward a recording material thereby recording characters or other patterns. Such printers can be provided with multiple discharge openings in high-density arrangement, because the heat-generating resistor (heater) provided in each discharge opening is significantly smaller than the piezoelectric element employed in the conventional ink jet printers. They also have the advantages of providing a recorded image of high quality and achieving high-speed recording with low noise.

Facsimile apparatus is required not only to transmit images at a high speed but also to receive images of high quality at a high speed. The bubble ink jet printer, with the above-explained features, is considered to meet such requirements, but facsimile apparatus equipped with such bubble ink jet printers has not been commercialized.

In ink jet printers, the ink discharge openings of the recording head may become blocked by the ink of which the viscosity is increased by a pause in the use of the recording head, by a low humidity atmosphere or by a difference in the frequency of use of the discharge openings, or by deposited dust. For this reason there has been employed a discharge recovery mechanism for expelling viscosified ink by pressurizing the interior of the recording head or sucking such viscosified ink through a cap member covering and protecting the discharge openings of the recording head. Even in the course of recording operation, such blocking may occur in the discharge openings whose frequency of use is relatively low, as the frequency of ink discharge is not uniform and some discharge openings may not be used at all. Since such blocking causes the image quality to deteriorate, a recovery operation for ink discharge is generally considered necessary at regular intervals.

Therefore, in incorporating an ink jet printer in the facsimile apparatus, it becomes necessary to protect the discharge openings of the recording head from drying or blocking, since a printing operation is not possible between pages during the reception of plural pages.

For these reasons, the above-explained recovery operation has to be conducted frequently, leading to a wasted consumption of the recording ink. An apparatus for carrying out manually a recovery treatment for the recording head is disclosed by US-A-4745414.

The present invention provides an image communicating apparatus having the features of claim 1 or 10. Specific embodiments of the invention are defined in the appendant claims.

Embodiments of the image communicating apparatus enable the number of recovery operations for the recording head to be reduced, enabling received data to be stored in memory means and subsequently permit data to be recorded on a suitable medium in a collective manner. Embodiments of the invention provide an image communicating apparatus in which the number of recovery operations for the recording head can be reduced in the case of image reception in an error correction mode. Embodiments of the image communicating apparatus may be capable, where image reception is in a half-duplex or full-duplex error correction mode, of uncapping the recording head and effecting collective recording when the amount of received image data reaches a certain capacity (for example 64 Kbytes) of the memory (for example at the reception of a PPS-NULL signal) or when a page of the original is fixed (for example by the reception of a PPS-MPS, PPS-EOM or PPS-EOP signal), thereby reducing the entire time required for recording (namely the uncapped time), thus reducing the number of idle ink discharges and minimizing the wasted ink consumption.

How the invention may be put into effect will now be described, by way of example only, with reference to the accompanying drawings.

### BRIEF DESCRIPTION OF THE DRAWINGS

Fig. 1 is a schematic view showing the basic structure of an embodiment of the present invention;
Fig. 2 is a perspective view of an ink jet cartridge for bubble jet recording, in which the present invention is applicable;
Fig. 3 is a perspective view of a recording system of a facsimile apparatus which utilizes the ink jet cartridge shown in Fig. 2 and in which the present invention is applicable;
Fig. 4 is a block diagram of the circuit structure of the facsimile apparatus embodying the present invention;
Figs. 5A and 5B are respectively a chart and a flow chart showing the printing sequence in an embodiment of the present invention;
Figs. 6A and 6B are similar charts showing another printing sequence;
Fig. 7 is a schematic perspective view of a full-line ink jet recording apparatus constituting another embodiment; and
Fig. 8 is a perspective view of the recording head employed in the apparatus shown in Fig. 7.

### DETAILED DESCRIPTION OF THE PREFERRED EMBODIMENTS

Now the present invention will be clarified in detail by embodiments thereof shown in the attached drawings.

### Basic structure

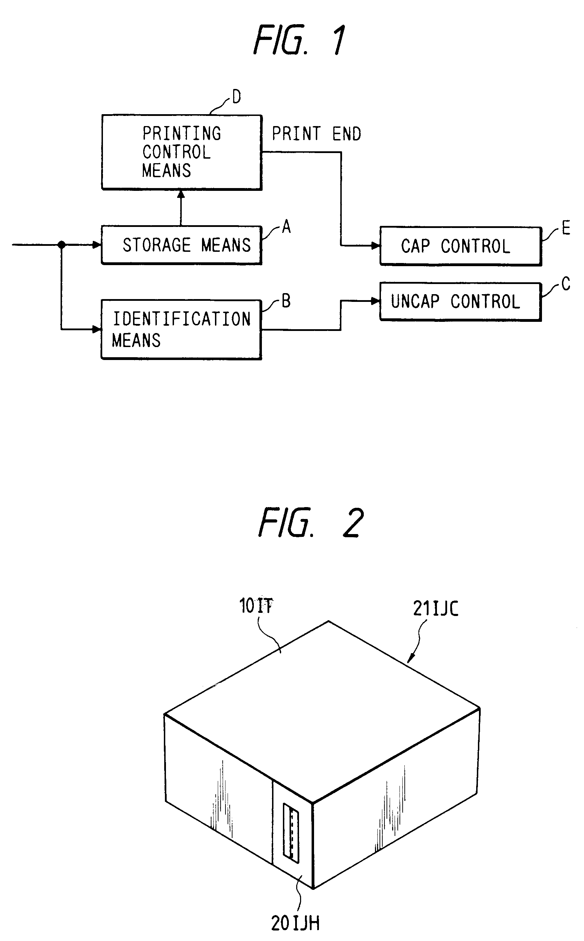

Fig. 1 shows the basic structure of an embodiment of the image communicating apparatus of the present invention. The present embodiment is a facsimile apparatus having an ink jet recording head and adapted to effect image reception according to the error correction mode, provided with memory means A for storing a group of image signals transmitted from a transmitting unit; identification means B for identifying a protocol signal transmitted in succession to said image signal; uncapping control means C for detaching a cap from said ink jet recording head in response to the output of said identifying means; printing control means E for collectively printing the image data stored in said memory means after said cap is detached; and capping control means E for capping said recording head after said collective printing.

### Structure of recording system (printer)

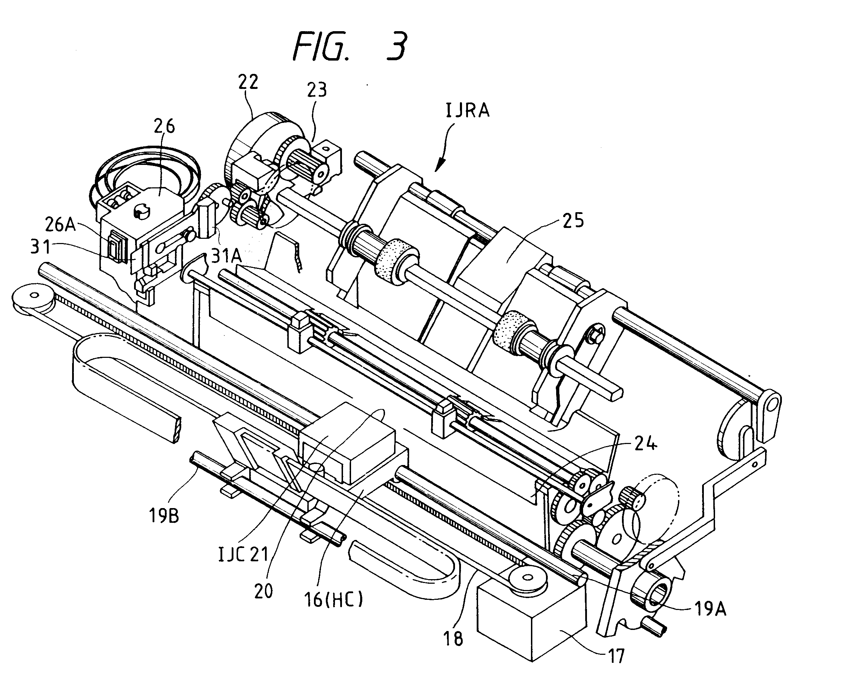

Figs. 2 and 3 illustrate an example of the ink jet printer adapted for use as the recording system for the facsimile apparatus embodying the present invention, wherein IJH indicates an ink jet recording head of bubble jet process; IJC indicates a detachable ink jet cartridge integral with the ink jet head IJH and provided with a tank IT for supplying ink thereto; and IJRA is the main body of the ink jet recording apparatus.

In the ink jet cartridge IJC of the present embodiment, as shown in Fig. 2, the front end of the ink jet recording head IJH protrudes slightly from the front face of the ink tank IT. Said ink jet head cartridge IJC is of disposable type and is detachably mounted on a carriage provided in the ink jet recording apparatus IJRA to be explained later.

A first ink tank IT (10) containing the ink to be supplied to the ink jet head (IJH) is composed of an ink absorbent member, a container housing said ink absorbent member, and a cover member sealing said container (these members not being shown). Said ink tank IT (10) is filled with ink which is supplied to the ink jet head responding to the ink discharge therefrom.

In the present embodiment, a front plate 4 is composed of a resinous material of excellent ink resistance such as polysylfone, polyethersulfone, polyphenyleneoxide or polypropylene.

The ink jet cartridge IJC explained above is detachably mounted, by a predetermined method, on the carriage HC of the ink jet recording apparatus IJRA as will be explained later, and desired image recording is achieved by the control of relative movement between the carriage HC and the recording material in response to recording signals.

Fig. 3 is an external perspective view of an example of the ink jet recording apparatus IJRA equipped with the mechanisms for the above-explained process.

In Fig. 3, the ink jet recording head 20 of the ink jet cartridge IJC is provided with a group of nozzles for ink discharge toward a recording face of a recording sheet, which is supplied from a sheet feeding unit 25 onto a platen 24. A carriage 16 (HC) supporting the recording head 20 is linked with a part of a driving belt 18 transmitting the driving force of a driving motor 17 and is rendered slidable along two parallel guide shafts 19A, 19B, whereby the recording head 20 can reciprocate over the entire width of the recording sheet.

A head recovery unit 26 is provided at an end of the moving path of the recording head 20, for example at a position opposed to the home position of the recording head. Said head recovery unit 26 is activated to cap the recording head 20, by a motor 22 through a transmission mechanism 23. In cooperation with the capping operation of the recording head 20 by a cap member 26A of said unit 26, ink is forcedly discharged from the discharge openings either by ink suction with suitable suction means (such as a suction pump) provided in the head recovery unit 26 or by ink pressurizing by suitable pressurizing means provided in the ink supply path to the recording head 20. Thus the viscous ink can be removed from the discharge openings. Also said capping protects the recording head after the end of recording operation.

A wiping blade 31 of silicone rubber, provided at a side of the head recovery unit 26, is supported by a cantilever mechanism on a blade support member 31A and is rendered engageable with the ink discharge face of the recording head 20 by means of the motor 22 and the transmission mechanism 23 in the same manner as the head recovery unit 26. Thus the blade 31 is made to protrude into the moving path of the recording head 20 at a suitable timing in the course of recording operation of said head 20 or after the discharge recovery operation by the recovery unit 26, thereby wiping off the liquid or dusts deposited on the ink discharge face of the head 20 as the result of movement thereof.

### Structure of control system

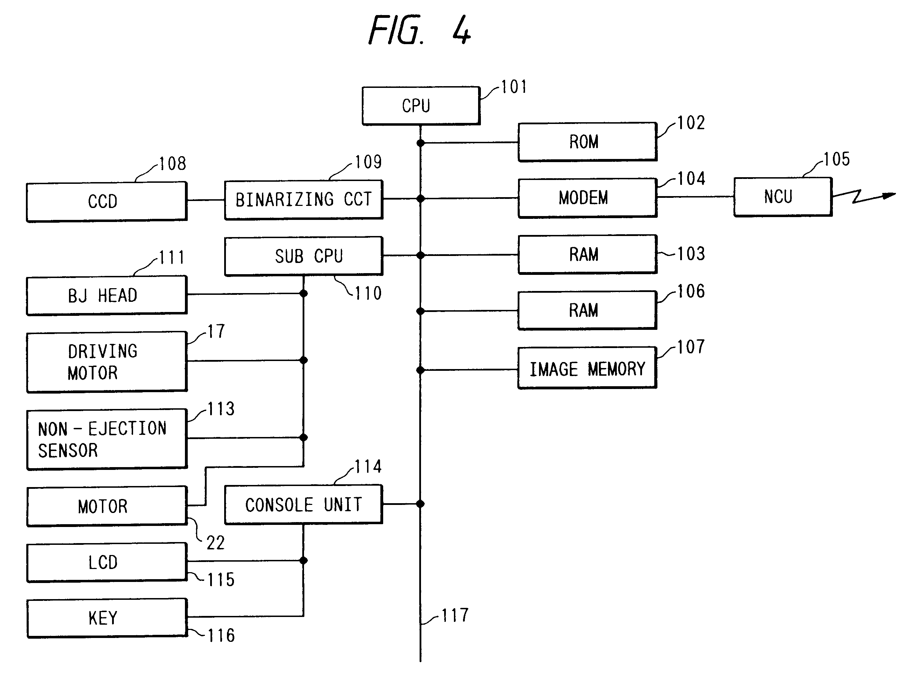

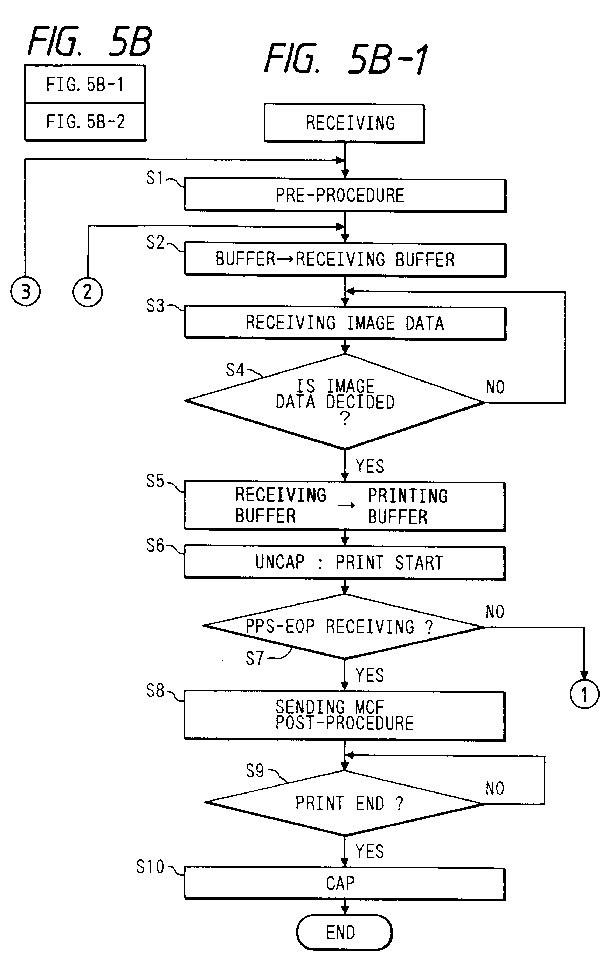

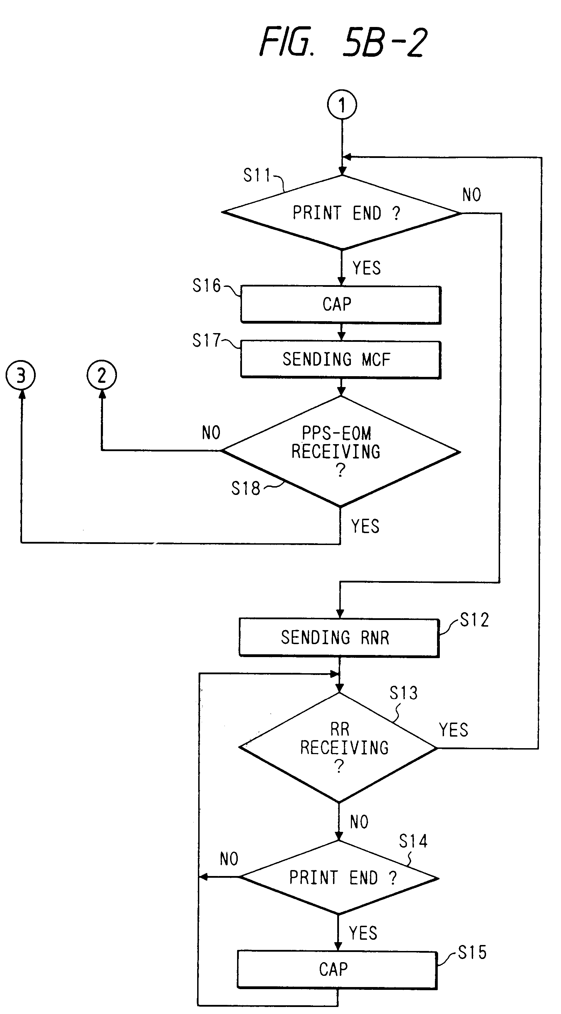

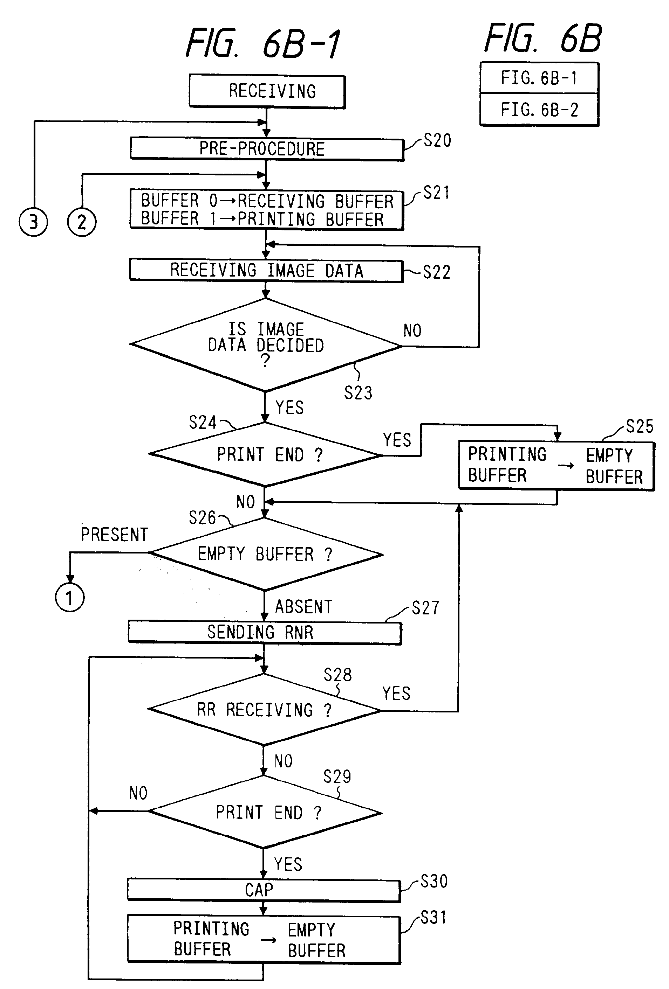

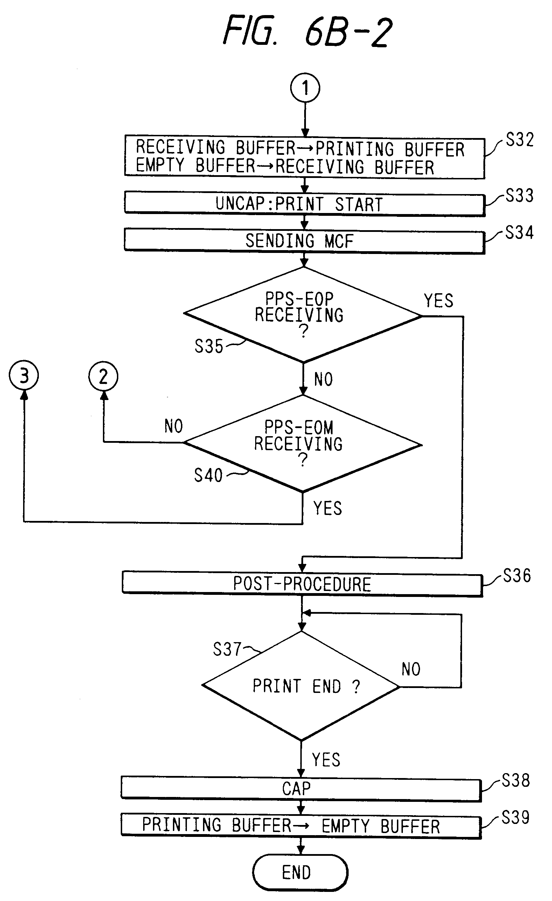

Fig. 4 shows an example of the circuit structure of the facsimile apparatus of the present embodiment. There are provided a CPU (central processing unit) 101 such as a microcomputer for controlling the data transmission and reception of the entire apparatus through a bus 117; a read-only memory (ROM) 102 storing programs corresponding to control sequences as shown in Figs. 5B and 6B; a random access memory (RAM) 103 used as a work memory for the CPU 101; a modulator-demodulator (MODEM) 104 for data transmission; a network control unit (NCU) 105 connected with the MODEM 104 and used for connection with public telephone lines; a registration RAM 106 for registering data such as telephone numbers and abbreviations; and an image RAM (DRAM) 107 for temporarily storing image data. Said memory 107 is used as an ECM buffer as will be explained later.

A CCD (charge coupled device) 108 serving image pickup means of the original image reading system, converts the original image focused through an imaging lens such as a rod lens array into electrical signals. A binary digitizing circuit 109 converts the output signals of the CCD 108 into binary signals.

A recording head 111 is provided in the recording system, which is composed, in the present embodiment, of a bubble jet recording apparatus as shown in Figs. 2 and 3. A sub CPU 110 is provided for controlling the bubble jet head 111, carriage driving motor 17, recovery unit 26, driving motor 22 therefor, a non-discharge sensor 113 etc., and is provided therein with a ROM storing a control program for image recording.

An operation unit 114 is provided with a liquid display device (LCD) 115 and various keys 116.

The facsimile apparatus of the present embodiment is capable of communication in the ECM (error correction mode), which enables data transmission and reception without line omission, according to CCITT recommendation.

The error correction in said mode can be realized either by image error resending by half-duplex communication or by image error resending by full-duplex communication.

In the error correction mode with half-duplex communication, the image data are divided into blocks, and each block is transmitted in a certain number of frames. The receiving unit effects error recognition upon reception of each frame, and this operation is repeated until the reception of image data of a block or a page. After the reception of data of a block, if there are frames including errors, a request for resending such error frames is sent to the transmitting unit. In response, the transmitting unit only resends the frames in which the error occurred, and the transmission of the next data block is started after the reception of correct image data is confirmed.

In the error correction mode with the fullduplex communication, the image data are transmitted in units of a frame. The receiving unit effects the error detection for each received frame, and, upon detection of an error frame, causes the transmitting unit to immediately terminate the transmission of image data and requests the resending of said error frame. The transmitting unit restarts image data transmission from the frame in which the error occurred.

Data of a frame consists of a field containing a frame number, a field containing image data and a field containing error check data, and the error detection is achieved by the correct reception of said error check data (CRC) and by the continuity of the received frame numbers. In the present embodiment, a frame is composed of 256 bytes, and a block is composed of 0 - 255 frames.

### Example of control sequence

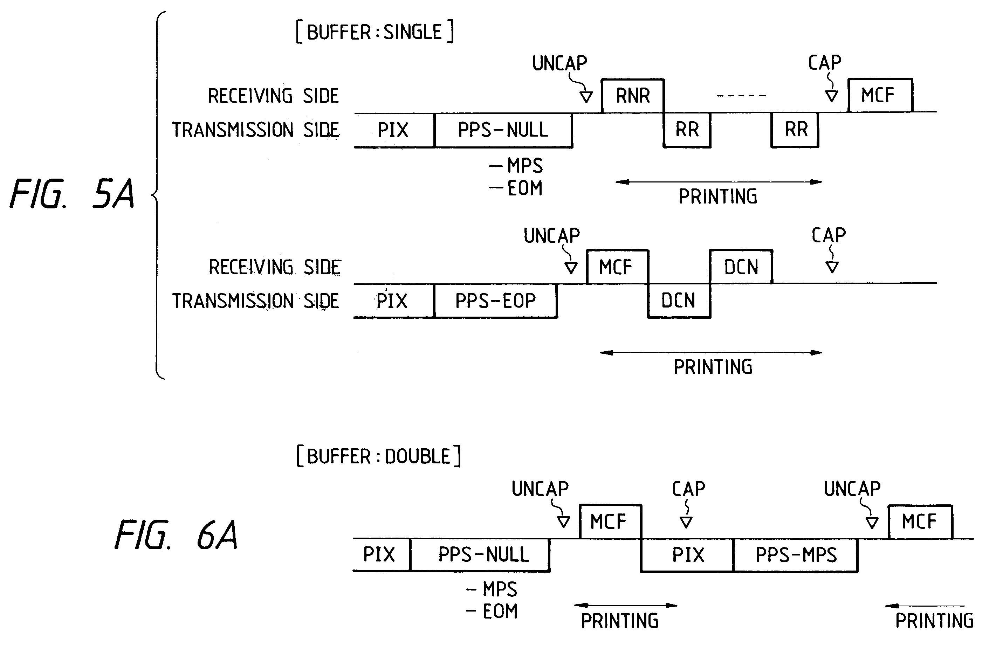

Fig. 5A shows the printing sequence in case an ECM buffer of 64 Kbytes is employed as the image memory 107 shown in Fig. 4.

In this embodiment, the main CPU 101 receives data in the error correction mode with half-duplex communication.

More specifically, the main CPU 101 inspects the error check code CRC and the continuity of the frame number upon reception of each frame, and, in the absence of error, stores the received data in a predetermined area of the ECM buffer. It also memorizes the presence or absence of error for each frame. Upon reception of data of a block, it transmits the data indicating the presence or absence of errors in the 0-th to 255th frames to the transmitting unit, which, in response, resends only the frames in which errors occurred.

Then, when the data of a block are stored in the image memory 107, data reception is once disabled and the recording head 20 is uncapped to initiate recording of the data stored in the image memory 107. More specifically, as shown in the upper half of Fig. 5A, when the transmitting unit sends the image signal PIX followed by a PPS (partial page signal)-NULL, PPS-MPS (multi page signal) or PPS-EOM (end of message), the present facsimile apparatus at the receiving side uncaps the recording head for effecting the recording operation, and sends a signal RNR (reception not realizable), indicating that the reception of image data is disabled. In response the transmitting unit sends a signal RR (reception realizable) asking whether the reception of image data is realizable, and the exchange of the signals RNR and RR is thereafter repeated. In the course of repeated exchanges of said signals RNR and RR, the received image data are collectively printed, and the recording head is capped upon completion of the printing operation. Then a signal MCF (message confirmation) is sent to the transmitting unit, which, in response, effects again the transmission of the image signal.

The lower half in Fig. 5A shows the printing sequence in case the image signal PIX is followed by a signal PPS-EOP (end of protocol). Also in this case, the facsimile apparatus uncaps the recording head to initiate the collective printing of the received data. In this case the facsimile apparatus sends a signal MCF (message confirmation) to the transmitting unit, then receives a signal DCN (disconnect command) therefrom, and sends the signal DCN (disconnect command). The recording head is capped at the end of the printing operation.

Fig. 5B is a flow chart for executing the printing sequence shown in Fig. 5A. The contents of the steps in this flow chart are as follows:
- S1:: confirms the mode of received page (width of original/density of sub scanning lines) by a pre-procedure;
- S2:: selects the ECM buffer (64 Kbytes) (memory 107) as the reception buffer for the compression encoded image data;
- S3:: reads compression encoded image data of a byte from the modem and stores said data in the reception buffer;
- S4:: Steps S3 and S4 are repeated until the reception buffer (64 Kbytes) becomes full (indicated by the reception of PPS-NULL) or until the reception of image data of a page (indicated by the reception of PPS-MPS, PPS-EOM or PPS-EOP);
- S5:: selects the reception buffer as the printing buffer when the image data are fixed;
- S6:: instructs the sub CPU 110 to drive the motor 22 for uncapping the recording head and to initiate the printing operation; then reads the compression encoded image data from the printing buffer and decodes said data, thereby effecting conversion into original data. The sub CPU 110 receives said original data, and effects printing by controlling the bubble jet head 111 and the driving motor 112;
- S7:: transfers the sequence to a step S8 if PPS-EOP is received in the step S4, or to a step S11 otherwise;
- S8:: sends the signal MCF, effects a post-procedure (reception/transmission of DCN) and terminates the communication;
- S9:: awaits the completion of printing;
- S10:: activates the motor 22 after the end of printing, thereby capping the recording head;
- S11:: in case of reception other than PPS-EOP, discriminates whether the printing is terminated, and the sequence proceeds to a step S12 if not terminated, or to a step S16 for capping if terminated;
- S12:: sends a signal RNR;
- S13:: discriminates whether a signal RR has been received, and the sequence proceeds to the step S11 or to a step S14 according to whether said signal has been received or not;
- S14:: discriminates whether the printing operation has been completed, and, if completed, the sequence proceeds to a step S15 for capping the recording head, or, if not completed, the sequence returns to the step S13;
- S17:: sends a signal MCF;
- S18:: If PPS-EOM is received in the step S4, the sequence returns to the step S1 to repeat the procedure from the pre-procedure. If other signal PPS-NULL or PPS-MPS is received, the sequence returns to the step S2 for receiving next image data.

Fig. 6A shows the sequence of collective printing employing two ECM buffers of 64 Kbytes (ECM buffer 0 and ECM buffer 1) as the image memory 107 shown in Fig. 4. The illustrated printing sequence is rendered possible by utilizing one of said buffers as the reception buffer and the other as the printing buffer.

Also in this case, data reception is conducted in the error correction mode with half-duplex or full-duplex communication. Then, upon storage of data of 64 Kbytes in the buffer 0 or 1 or upon reception of image data of a page, the recording head 20 is uncapped, and the printing operation is initiated by reading the data from said buffer. Also a signal MCF (message confirmation) is sent to the transmitting unit, which, in response, sends next image data. Simultaneous with said printing operation, the receiving unit stores the received data in the other buffer. If data of 64 Kbytes are not stored in the other buffer nor the reception of image data of a page has been completed at the end of the printing operation, the recording head 20 is capped and the apparatus enters a standby state. Subsequently, when the data of 64 Kbytes are received or when the reception of image data of a page is completed, the recording head 20 is again uncapped to start the printing operation.

On the other hand, if data of 64 Kbytes are received in the other buffer or if the reception of image data of a page is completed at the end of the printing operation, the next printing operation is immediately started without capping the recording head.

Fig. 6B is a flow chart for executing the printing sequence shown in Fig. 6A. The contents of the steps in said flow chart are as follows:
- S20:: fixes the mode of the received page (width of the original/density of sub scanning lines) by a pre-procedure;
- S21:: selects the ECM buffer (64 Kbytes) 0 as the reception buffer for receiving the compression encoded image data, and the other ECM buffer (64 Kbytes) 1 as the printing buffer;
- S22:: reads the compression encoded image data of a byte from the modem and stores said data in the reception buffer;
- S23:: Steps S22 and S23 are repeated until the reception buffer (64 Kbytes) becomes full (indicated by the reception of PPS-NULL), or image data of a page is completed (indicated by the reception of PPS-MPS, PPS-EOM or PPS-EOP);
- S24:: discriminates whether the printing operation has been completed, when the image data are fixed;
- S25:: if completed, renders the printing buffer as an empty buffer;
- S26:: discriminates whether there is an empty buffer;
- S27:: sends a signal RNR;
- S28:: discriminates whether a signal RR has been received, and the sequence proceeds to a step S26 or S29 respective if received or not;
- S29:: discriminates whether the printing operation has been completed, and, if completed, a step S30 activates the motor 22 to cap the recording head. If not completed, the sequence returns to the step S28;
- S31:: renders the printing buffer as an empty buffer;
- S32:: selects the reception buffer as the printing buffer and the empty buffer as the reception buffer;
- S33:: instructs the sub CPU 110 to activate the motor 22 for uncapping the recording head 20 and to start the printing operation; reads the compression encoded image data from the printing buffer and converts said data into original image data. In response the sub CPU 110 receives said original data and effects the printing operation;
- S34:: sends a signal MCF;
- S35:: transfers the sequence to a step S36 if PPS-EOP is received in the step S23, or to S40 otherwise;
- S36:: effects a post-procedure (reception/transmission of DCN) and terminates the communication;
- S37:: awaits the completion of the printing operation;
- S38:: after the completion of the printing operation, activates the motor 22 to cap the recording head 20;
- S39:: renders the printing buffer as an empty buffer;
- S40:: The sequence returns to the step S20 to repeat the sequence from the pre-procedure in case the PPS-EOM is received in the step S23, or to the step S21 for receiving next image data if another signal (PPS-NULL or PPS-MPS) is received.

Though the foregoing embodiments have been explained in the error correction mode with half-duplex communication, the control may naturally be based on the full--duplex error correction mode.

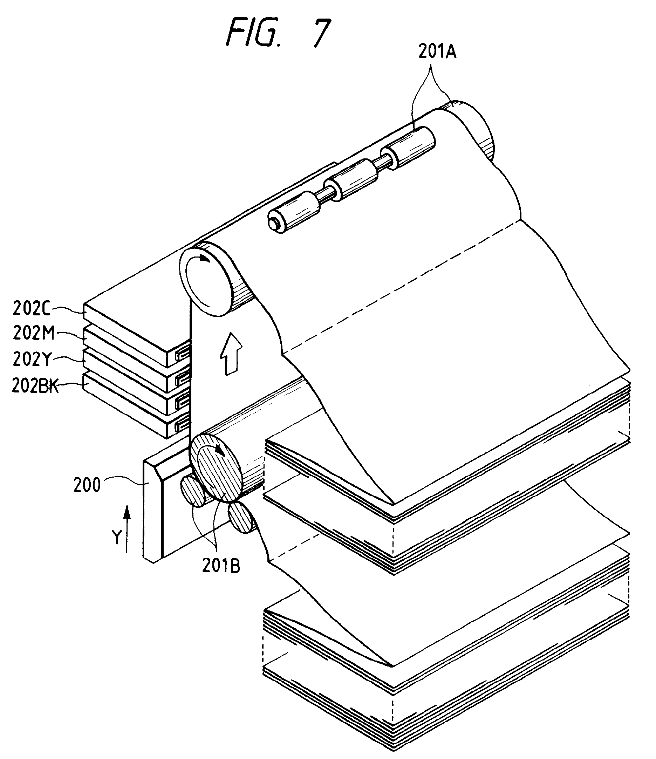

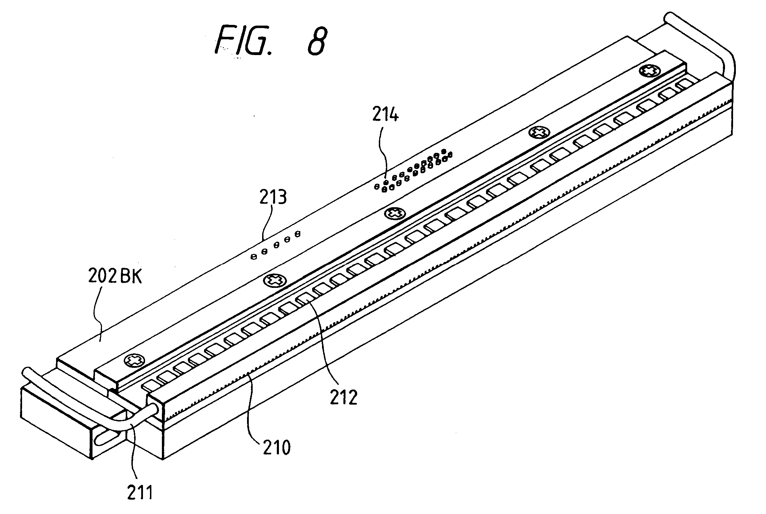

Also the present invention is applicable not only to the serial printer as explained above but also to a facsimile apparatus equipped with an ink jet recording apparatus having a full-line recording head of which length corresponds to the width of the maximum recording medium, as shown in Figs. 7 and 8.

Referring to Fig. 7, there are provided paired rollers 201A, 201B for supporting and transporting a recording medium R in the sub scanning direction Vs indicated by an arrow; and full-multi recording heads 202BK, 202Y, 202M and 202C for respectively recording black, yellow, magenta and cyan colors, each having nozzles arranged over the entire width of the recording medium R and arranged in the above-mentioned order from the upstream side in the transporting direction of the recording medium.

A recovery system 200 is brought to a position opposed to the recording heads 202BK - 202C and caps said recording heads at the recovery operation for ink discharge. However, in the present embodiment, the number of such discharge recovery operations can be significantly reduced by effecting preliminary heating at a suitable timing.

Fig. 8 is an external view of one of the recording heads 202BK - 202C shown in Fig. 7. In Fig. 8 there are shown ink discharge openings 210; an ink supply pipe 211; plural IC's (driving circuits) for driving electrothermal converting elements; and terminals 213, 214.

The control sequence shown in Fig. 5 or 6 is applicable also in case the present invention is applied to a facsimile apparatus equipped with such full-line printer. In such case, the value N in the step S21 in Fig. 6B indicates the number of lines in the sub scanning direction to be scanned at a time by the recording heads, and said value N may be equal to 1.

In order to prevent the ink evaporation from the discharge openings, the capping operation may be combined with so-called idle ink discharge, in which the ink in the vocinity of the discharge openings is discharged in the course of capping operation, independently from the recording information.

Also an idle ink discharge, conducted in a state without capping, more specifically conducted at the timing of uncapping shown in Figs. 5A and 6A, is also effective for preventing the failure in ink discharge.

However, the idle ink discharge is preferably conducted in the course of capping operation or while the cap is opposed to the recording heads, in consideration of the ease of disposal of the discharged ink.

The present invention is also applicable to a facsimile apparatus equipped with so-called piezoelectric ink jet printer, utilizing a piezoelectric element as the energy source for ink discharge.

Among various ink jet recording processes, the present invention provides particularly advantageous effects in a recording apparatus employing a recording head of so-called bubble jet process, since such process is suitable for achieving higher density and definition in the recording.

The working principle and structure of said process are preferably based on those disclosed for example in the U.S. Patents US-A-4,723,129 and US-A-4,740,796. Said process is applicable to so-called on-demand recording or continuous recording, but is particularly advantageous in the on-demand recording because a drive signal, corresponding to the recording information and inducing a rapid temperature increase exceeding the nucleus boiling, can be given to an electrothermal converter provided corresponding to a liquid path or a sheet holding liquid therein, thereby generating thermal energy in said electrothermal converter and inducing membrane boiling on a thermal action plane of the recording head, thus eventually forming a bubble in the liquid, corresponding one-to-one to said drive signal. The liquid (ink) is discharged from a discharge opening by the expansion or contraction of said bubble, thereby forming at least a droplet. Said drive signal is preferably formed as a pulse, in order to realize highly responsive expansion and contraction of said bubble, thus achieving liquid discharge with excellent response. Such pulse-shaped drive signal is preferably that disclosed in the U.S. Patents US-A-4,463,359 and US-A-4,345,262. Also still improved recording can be achieved by employing conditions disclosed in the U.S. Patent US-A-4,313,124 concerning the temperature elevation rate of said thermal action plane.

The structure of the recording head employable in the present invention not only includes combinations of the discharge openings, liquid paths (linear or rectangularly bent) and electrothermal converters disclosed in the above-mentioned patents but also the structures disclosed in the U.S. Patents US-A-4,558,333 and US-A-4,459,600 in which the thermal action unit is positioned in a bent portion. The present invention is furthermore effective in the structure disclosed in the Japanese Laid-open Patent Sho JP-A-590123670 in which a common slit is utilized as discharge openings for plural electrothermal converters, of the structure disclosed in the Japanese Laid-open Patent Sho JP-A-590138461 in which an opening for absorbing the pressure wave of thermal energy is provided corresponding to the discharge opening. Thus, regardless of the structure of the recording head, the present invention enables secure and efficient recording.

Also as explained in the foregoing embodiments, there may be employed only one recording head corresponding to single-colored ink, or plural recording heads corresponding to plural recording colors. Also there may be employed plural recording heads corresponding to inks of different densities.

As detailedly explained in the foregoing, since the printing operation is conducted in collective manner after a discharge recovery operation when a page in the memory or a page of the original document is fixed, it is rendered possible to reduce the number of idle ink discharges thereby minimizing the wasted ink consumption, and to securely record the received data without omission.

## Claims

1. An image communicating apparatus comprising:
communication means for enabling communication of procedure and image data signals with a transmitting unit;
recording means for discharging ink towards a recording material in accordance with image data received by the communication means;
capping means for capping the recording means;
memory means for storing the image data;
communication control means for controlling the memory means so as to store, in the memory means, image data transmitted from the transmitting unit, the communication control means being arranged to identify a procedure signal transmitted in succession to the image data to determine whether or not reception of a predetermined amount of image data has been completed;
capping control means for controlling the capping means to separate a cap from the recording means after the communication control means has determined that reception of the predetermined amount of image data has been completed; and
recording control means for controlling said recording means so as to record the image data stored in the memory means after the separation of the cap by the capping control means.

2. An apparatus according to claim 1, wherein the capping control means is adapted to control the capping means to cap the recording means after the recording of the image data stored in the memory means.

3. An apparatus according to claim 1 or 2, wherein the communication control means is adapted to inspect the received image data for errors, and to request re-sending of the said image data in the event of an error being detected.

4. An apparatus according to claim 3, wherein the communication control means is adapted to inspect for errors in transmission by half-duplex or full-duplex communication.

5. An apparatus according to claim 1, 2, 3 or 4, further comprising plural memory means arranged such that, during printing of the image data stored in one of the said plural memory means, received data are stored in another memory means.

6. An apparatus according to claim 5, wherein, if a predetermined amount of image data is not stored in the said other memory means at the completion of printing of the image data stored in the first-mentioned memory means, the capping control means is adapted to control the capping means so as to cap the recording means.

7. An apparatus according to any one of the preceding claims, wherein the communication control means is adapted to determine whether the predetermined amount of image data has been received by identifying a protocol signal transmitted at the end of transmission of an amount of image data, a protocol signal transmitted at the end of transmission of image data for a page or a protocol signal transmitted at the end of transmission of image data for all pages.

8. An apparatus according to any one of claims 1 to 7, wherein the recording means comprises plural discharge openings for discharging ink, and respective thermal energy generating means provided for each of said discharge openings and adapted to induce a thermal state change in the ink thereby discharging ink from the discharge opening and forming a flying liquid droplet.

9. An apparatus according to claim 8, wherein the state change involves formation of a bubble by film boiling.

10. An image communication apparatus comprising:
communication means for enabling communication of procedure signals and image data signals with a transmitting unit;
recording means for discharging ink towards a recording material in accordance with the image data received by the communication means;
recovery means for effecting a discharge recovery treatment on the recording means;
memory means for storing the image data;
communication control means for controlling the memory means so as to store, in the memory means, the image data transmitted from the transmitting unit, the communication control means being adapted to inspect the transmitted data for errors and to request the re-sending of the image data when the transmitted data includes an error and the communication control means being arranged to identify a procedure signal transmitted in succession to the image data to determine whether or not reception of a predetermined amount of image data has been completed;
recovery control means for controlling the recovery means to effect a discharge recovery treatment after the communication control means determines that reception of the predetermined amount of image data has been completed; and
recording control means for controlling the recording means so as to record the image data stored in the memory means after operation of the recovery means.

11. An apparatus according to claim 10, wherein the recovery means comprises capping means for capping the recording means, and the recovery control means is adapted to control the capping means to separate a cap from the recording means after the communication control means determines that reception of the predetermined amount of image data has been completed.

12. An apparatus according to claim 11, wherein the recovery control means is adapted to control the capping means to cap the recording means after the recording of the image data stored in the memory means.

13. An apparatus according to any one of claims 10 to 12, wherein the communication control means is adapted to identify a protocol signal transmitted at the end of transmission of a predetermined amount of image data, a protocol signal transmitted at the end of transmission of image data for a page or a protocol signal transmitted at the end of transmission of image data for all pages.

14. An apparatus according to claim 10, 11, 12 or 13, wherein the communication control means is adapted to check for an error in transmission by half-duplex or full-duplex communication.

15. An apparatus according to any one of claims 10 to 14, wherein the recording means comprises plural discharge openings for discharging ink, and respective thermal energy generating means provided for each of the discharge openings and adapted to induce a thermal state change in the ink thereby discharging ink from the discharge opening and forming a flying liquid droplet.

16. An apparatus according to claim 15, wherein said state change involves formation of a bubble by film boiling.

## Patentansprüche

1. Bildübertragungsgerät mit:
einer Übertragungseinrichtung zum Ermöglichen der Übertragung von Prozedur- und Bilddatensignalen mit einer Sendeeinheit;
einer Aufzeichnungseinrichtung zum Ausstoßen von Tinte in Richtung eines Aufzeichnungsmaterials in Übereinstimmung mit von der Übertragungseinrichtung empfangenen Bilddaten;
einer Abdeckeinrichtung zum Abdecken der Aufzeichnungseinrichtung;
einer Speichereinrichtung zum Speichern der Bilddaten;
einer Übertragungs-Steuereinrichtung zum Steuern der Speichereinrichtung, um von der Sendeeinheit übertragene Bilddaten in der Speichereinrichtung zu speichern, wobei die Übertragungs-Steuereinrichtung vorgesehen ist, um ein im Anschluß an Bilddaten übertragenes Prozedur-Signal zu erkennen, um zu bestimmen, ob der Empfang einer vorbestimmten Bilddatenmenge abgeschlossen wurde oder nicht;
einer Abdeck-Steuereinrichtung zum Steuern der Abdeckeinrichtung, um eine Abdeckung von der Aufzeichnungseinrichtung zu trennen, nachdem die Übertragungs-Steuereinrichtung bestimmt hat, daß der Empfang der vorbestimmten Bilddatenmenge abgeschlossen wurde; und
einer Aufzeichnungs-Steuereinrichtung zum Steuern der Aufzeichnungseinrichtung, um die in der Speichereinrichtung gespeicherten Bilddaten nach dem Trennen der Abdeckung mittels der Abdeck-Steuereinrichtung aufzuzeichnen.

2. Gerät nach Anspruch 1, wobei
die Abdeck-Steuereinrichtung vorgesehen ist, um die Abdeckeinrichtung zu steuern, um die Aufzeichnungseinrichtung nach dem Aufzeichnen der in der Speichereinrichtung gespeicherten Bilddaten abzudecken.

3. Gerät nach Anspruch 1 oder 2, wobei
die Übertragungs-Steuereinrichtung vorgesehen ist, um die empfangenen Bilddaten auf Fehler hin zu untersuchen, und um im Fall, daß ein Fehler erfaßt wurde, das nochmalige Senden der Bilddaten anzufordern.

4. Gerät nach Anspruch 3, wobei
die Übertragungs-Steuereinrichtung vorgesehen ist, um mittels einer Halb-Duplex- oder Voll-Duplex-Übertragung auf Fehler bei der Übertragung hin zu untersuchen.

5. Gerät nach Anspruch 1, 2, 3 oder 4, das zudem mehrere Speichereinrichtungen umfaßt, die derart angeordnet sind, daß während des Druckens der in einer der mehreren Speichereinrichtungen gespeicherten Bilddaten empfangene Daten in einer anderen Speichereinrichtung gespeichert werden.

6. Gerät nach Anspruch 5, wobei,
wenn beim Abschließen des Druckens der in der zuerst erwähnten Speichereinrichtung gespeicherten Bilddaten in der anderen Speichereinrichtung eine vorbestimmte Bilddatenmenge nicht gespeichert ist, die Abdeck-Steuereinrichtung vorgesehen ist, um die Abdeckeinrichtung zu steuern, um die Aufzeichnungseinrichtung abzudecken.

7. Gerät nach einem der vorhergehenden Ansprüche, wobei
die Übertragungs-Steuereinrichtung vorgesehen ist, um durch Erkennen eines am Ende der Übertragung einer Bilddatenmenge übertragenen Protokollsignals, eines am Ende der Übertragung von Bilddaten für eine Seite übertragenen Protokollsignals oder eines am Ende der Übertragung von Bilddaten für alle Seiten übertragenen Protokollsignals zu bestimmen, ob die vorbestimmte Bilddatenmenge empfangen wurde oder nicht.

8. Gerät nach einem der Ansprüche 1 bis 7, wobei
die Aufzeichnungseinrichtung mehrere Ausstoßöffnungen zum Ausstoßen von Tinte sowie entsprechende, für jede der Ausstoßöffnungen vorgesehene thermische Energieerzeugungseinrichtungen aufweist, die vorgesehen sind, um eine thermische Zustandsänderung in der Tinte herbeizuführen, wodurch Tinte aus der Ausstoßöffnung ausgestoßen wird und ein fliegendes Flüssigkeitströpfchen ausgebildet wird.

9. Gerät nach Anspruch 8, wobei
die Zustandsänderung die Ausbildung eines Bläschens durch Filmsieden einschließt.

10. Bildübertragungsgerät mit:
einer Übertragungseinrichtung zum Ermöglichen einer Übertragung von Prozedur-Signalen und Bilddatensignalen mit einer Sendeeinheit;
einer Aufzeichnungseinrichtung zum Ausstoßen von Tinte in Richtung eines Aufzeichnungsmaterials in Übereinstimmung mit von der Übertragungseinrichtung empfangenen Bilddaten;
einer Rückgewinnungseinrichtung zum Durchführen einer Ausstoß-Rückgewinnungsbehandlung an der Aufzeichnungseinrichtung;
einer Speichereinrichtung zum Speichern der Bilddaten;
einer Übertragungs-Steuereinrichtung zum Steuern der Speichereinrichtung, um die von der Sendeeinheit übertragenen Bilddaten in der Speichereinrichtung zu speichern, wobei die Übertragungs-Steuereinheit vorgesehen ist, um die übertragenen Daten auf Fehler hin zu untersuchen und das nochmalige Senden der Bilddaten anzufordern, wenn die übertragenen Daten einen Fehler enthalten, und die Übertragungs-Steuereinheit vorgesehen ist, um ein im Anschluß an die Bilddaten übertragenes Prozedur-Signal zu erkennen, um zu bestimmen, ob der Empfang einer vorbestimmten Bilddatenmenge abgeschlossen wurde oder nicht;
einer Rückgewinnungs-Steuereinrichtung zum Steuern der Rückgewinnungseinrichtung, um eine Ausstoß-Rückgewinnungsbehandlung durchzuführen, nachdem die Übertragungs-Steuereinrichtung bestimmt, daß der Empfang der vorbestimmten Bilddatenmenge abgeschlossen wurde; und
einer Aufzeichnungs-Steuereinrichtung zum Steuern der Aufzeichnungseinrichtung, um die in der Speichereinrichtung gespeicherten Bilddaten nach der Betätigung der Rückgewinnungseinrichtung aufzuzeichnen.

11. Gerät nach Anspruch 10, wobei
die Rückgewinnungseinrichtung eine Abdeckeinrichtung zum Abdecken der Aufzeichnungseinrichtung umfaßt, und die Rückgewinnungs-Steuereinrichtung vorgesehen ist, um die Abdeckeinrichtung zu steuern, um eine Abdeckung von der Aufzeichnungseinrichtung zu trennen, nachdem die Übertragungs-Steuereinrichtung bestimmt, daß der Empfang der vorbestimmten Bilddatenmenge abgeschlossen wurde.

12. Gerät nach Anspruch 11, wobei
die Rückgewinnungs-Steuereinrichtung vorgesehen ist, um die Abdeckeinrichtung zu steuern, um die Aufzeichnungseinrichtung nach dem Aufzeichnen der in der Speichereinrichtung gespeicherten Bilddaten abzudecken.

13. Gerät nach einem der Ansprüche 10 bis 12, wobei
die Übertragungs-Steuereinrichtung vorgesehen ist, um ein am Ende der Übertragung einer vorbestimmten Bilddatenmenge übertragenes Protokollsignal, ein am Ende der Übertragung von Bilddaten für eine Seite übertragenes Protokollsignal oder ein am Ende der Übertragung von Bilddaten für alle Seiten übertragenes Protokollsignal zu erkennen.

14. Gerät nach Ansprch 10, 11, 12, oder 13, wobei
die Übertragungs-Steuereinrichtung vorgesehen ist, um mittels einer Halb-Duplex- oder Voll-Duplex-Übertragung auf einen Fehler bei der Übertragung hin zu überprüfen.

15. Gerät nach einem der Ansprüche 10 bis 14, wobei
die Aufzeichnungseinrichtung mehrere Ausstoßöffnungen zum Ausstoßen von Tinte sowie entsprechende, für jede der Ausstoßöffnungen vorgesehene thermische Energieerzeugungseinrichtungen aufweist, die vorgesehen sind, um eine thermischen Zustandsänderung in der Tinte herbeizuführen, wodurch Tinte aus der Ausstoßöffnung ausgestoßen wird und ein fliegendes Flüssigkeitströpfchen ausgebildet wird.

16. Gerät nach Anspruch 15, wobei
die Zustandsänderung die Ausbildung eines Bläschens durch Filmsieden einschließt.

## Revendications

1. Un appareil de transmission d'images comprenant :
des moyens de transmission pour permettre la transmission de signaux de données de procédure et d'images en relation avec une unité émettrice ;
des moyens d'enregistrement pour décharger de l'encre vers une matière d'enregistrement, conformément à des données d'images qui sont reçues par les moyens de transmission ;
des moyens d'encapuchonnement pour encapuchonner les moyens d'enregistrement ;
des moyens de mémoire pour mémoriser les données d'images ;
des moyens de commande de transmission pour commander les moyens de mémoire, de façon à mémoriser, dans les moyens de mémoire, des données d'images qui sont émises par l'unité émettrice, les moyens de commande de transmission étant conçus de façon à identifier un signal de procédure qui est émis à la suite des données d'images, pour déterminer si la réception d'une quantité prédéterminée de données d'images a été achevée ou non ;
des moyens de commande d'encapuchonnement pour commander les moyens d'encapuchonnement de façon à séparer un capuchon des moyens d'enregistrement après que les moyens de commande de transmission ont déterminé que la réception de la quantité prédéterminée de données d'images a été achevée ; et
des moyens de commande d'enregistrement pour commander les moyens d'enregistrement de façon à enregistrer les données d'images mémorisées dans les moyens de mémoire, après la séparation du capuchon par les moyens de commande d'encapuchonnement.

2. Un appareil selon la revendication 1, dans lequel les moyens de commande d'encapuchonnement sont conçus pour commander les moyens d'encapuchonnement de façon à encapuchonner les moyens d'enregistrement après l'enregistrement des données d'images qui sont mémorisées dans les moyens de mémoire.

3. Un appareil selon la revendication 1 ou 2, dans lequel les moyens de commande de transmission sont conçus de façon à examiner les données d'images reçues pour rechercher des erreurs, et de façon à demander une réémission de ces données d'images dans le cas où une erreur est détectée.

4. Un appareil selon la revendication 3, dans lequel les moyens de commande de transmission sont conçus de façon à rechercher des erreurs de transmission, par transmission en alternat ou en duplex.

5. Un appareil selon la revendication 1, 2, 3 ou 4, comprenant en outre plusieurs moyens de mémoire qui sont conçus de façon que, pendant l'impression des données d'images qui sont mémorisées dans l'un des moyens de mémoire multiples, des données reçues soient mémorisées dans un autre moyen de mémoire.

6. Un appareil selon la revendication 5, dans lequel, si une quantité prédéterminée de données d'images n'est pas mémorisée dans ledit autre moyen de mémoire, à l'achèvement de l'impression des données d'images qui sont mémorisées dans le moyen de mémoire mentionné en premier, les moyens de commande d'encapuchonnement commandent les moyens d'encapuchonnement de façon à encapuchonner les moyens d'enregistrement.

7. Un appareil selon l'une quelconque des revendications précédentes, dans lequel les moyens de commande de transmission sont conçus pour déterminer si la quantité prédéterminée de données d'images a été reçue en identifiant un signal de protocole qui est émis à la fin de l'émission d'une quantité de données d'images, un signal de protocole qui est émis à la fin de l'émission de données d'images pour une page, ou un signal de protocole qui est émis à la fin de l'émission de données d'images pour toutes les pages.

8. Un appareil selon l'une quelconque des revendications 1 à 7, dans lequel les moyens d'enregistrement comprennent plusieurs ouvertures de décharge pour décharger de l'encre, et des moyens de générations d'énergie thermique respectifs incorporés pour chacune des ouvertures de décharge, et conçus de façon à provoquer un changement d'état thermique dans l'encre, pour ainsi décharger de l'encre à partir de l'ouverture de décharge et former une gouttelette de liquide qui vole.

9. Un appareil selon la revendication 8, dans lequel le changement d'état fait intervenir la formation d'une bulle par ébullition pelliculaire.

10. Un appareil de transmission d'images comprenant :
des moyens de transmission pour permettre la transmission de signaux de procédure et de signaux de données d'images en relation avec une unité émettrice ;
des moyens d'enregistrement pour décharger de l'encre vers une matière d'enregistrement conformément aux données d'images qui sont reçues par les moyens de transmission ;
des moyens de maintenance pour effectuer un traitement de maintenance par décharge sur les moyens d'enregistrement ;
des moyens de mémoire pour mémoriser les données d'images ;
des moyens de commande de transmission pour commander les moyens de mémoire de façon à mémoriser, dans les moyens de mémoire, les données d'images qui sont émises par l'unité émettrice, les moyens de commande de transmission étant conçus de façon à examiner les données émises pour rechercher des erreurs, et à demander la réémission des données d'images lorsque les données émises contiennent une erreur, et les moyens de commande de transmission étant conçus de façon à identifier un signal de procédure qui est émis à la suite des données d'images, pour déterminer si la réception d'une quantité prédéterminée de données d'images a été achevée ou non ;
des moyens de commande de maintenance pour commander les moyens de maintenance de façon qu'ils effectuent un traitement de maintenance par décharge après que les moyens de commande de transmission ont déterminé que la réception de la quantité prédéterminée de données d'image a été achevée; et
des moyens de commande d'enregistrement pour commander les moyens d'enregistrement de façon à enregistrer les données d'images mémorisées dans les moyens de mémoire, après le fonctionnement des moyens de maintenance.

11. Un appareil selon la revendication 10, dans lequel les moyens de maintenance comprennent des moyens d'encapuchonnnement pour encapuchonner les moyens d'enregistrement, et les moyens de commande de maintenance sont conçus de façon à commander les moyens d'encapuchonnement pour séparer un capuchon des moyens d'enregistrement, après que les moyens de commande de transmission ont déterminé que la réception de la quantité prédéterminée de données d'images a été achevée.

12. Un appareil selon la revendication 11, dans lequel les moyens de commande de maintenance sont conçus de façon à commander les moyens d'encapuchonnement pour encapuchonner les moyens d'enregistrement après l'enregistrement des données d'images qui sont mémorisées dans les moyens de mémoire.

13. Un appareil selon l'une quelconque des revendications 10 à 12, dans lequel les moyens de commande de transmission sont conçus de façon à identifier un signal de protocole qui est émis à la fin de l'émission d'une quantité prédéterminée de données d'images, un signal de protocole qui est émis à la fin de l'émission de données d'images pour une page, ou un signal de protocole qui est émis à la fin de l'émission de données d'images pour toutes les pages.

14. Un appareil selon la revendication 10, 11, 12 ou 13, dans lequel les moyens de commande de transmission sont conçus pour effectuer un contrôle portant sur une erreur de transmission, par transmission en alternat ou en duplex.

15. Un appareil selon l'une quelconque des revendications 10 à 14, dans lequel les moyens d'enregistrement comprennent plusieurs ouvertures de décharge pour décharger de l'encre, et des moyens de génération d'énergie thermique respectifs, incorporés pour chacune des ouvertures de décharge et conçus pour provoquer un changement d'état thermique dans l'encre, pour ainsi décharger de l'encre à partir de l'ouverture de décharge et former une gouttelette de liquide qui vole.

16. Un appareil selon la revendication 15, dans lequel le changement d'état fait intervenir la formation d'une bulle par ébullition pelliculaire.
